# EUROPEAN PATENT APPLICATION

(11) **EP 4 328 999 A1**
(43) Date of publication of application: **28.02.2024**
(21) Application number: 22916720.0
(22) Date of filing: 27.12.2022
(51) Int. Cl.: H01M 4/133, H01M 4/1393, H01M 4/36, H01M 4/587, H01M 4/48, H01M 4/38, H01M 4/62, H01M 10/0525, H01M 4/02

(54) **ANODE SLURRY FOR LITHIUM ION SECONDARY BATTERY AND MANUFACTURING METHOD THEREFOR**

(30) Priority: 27.12.2021 JP 2021212768
(71) Applicant: LG Energy Solution, Ltd., Seoul 07335 (KR)
(72) Inventor: MATSUBARA, Keiko, Yokohama-shi, Kanagawa 220-0011 (JP); TAKAMUKU, Akira, Yokohama-shi, Kanagawa 220-0011 (JP)
(74) Representative: Hoffmann Eitle
(86) International application number: PCT/KR2022/021442
(87) International publication number: WO 2023/128579

(57) **Abstract**

Provided are a negative electrode slurry including a gas adsorbent configured to adsorb hydrogen gas generated in the slurry so that the stability of the slurry may be improved, and a method for preparing the same. The negative electrode slurry for a lithium secondary battery includes a lithium-doped silicon oxide as a negative electrode active material, water as a solvent, a binder, and single-walled carbon nanotubes functioning as a gas adsorbent, and has a pH of 10 or more.

## Description

### TECHNICAL FIELD

The present application claims priority to Japanese Patent Application No. 2021-212768 filed on December 27, 2021. The present disclosure relates to a negative electrode slurry for a lithium-ion secondary battery and a method for preparing the same.

### BACKGROUND ART

As technical development of mobile instruments and electric vehicles have been conducted and demand therefor has been increased, secondary batteries as energy sources have been increasingly in demand. Among such secondary batteries, lithium secondary batteries having high energy density and operating voltage and showing long cycle life and a low self-discharge rate have been commercialized and used widely. Currently, active studies have been performed to provide such lithium-ion secondary batteries with high capacity.

Since silicon-based materials, such as silicon oxide and silicon-based alloy, have a higher theoretical capacity as compared to carbonaceous materials, such as graphite, mainly used currently, they have been expected and studied to date as negative electrode materials capable of improving the energy density of a lithium-ion secondary battery. Among such silicon-based materials, particularly, silicon oxide (SiOₓ (0 < x < 2), such as SiO) shows a relatively low swelling ratio and is commercialized partially. However, silicon oxide has a problem in that it shows low initial efficiency due to the irreversibility on lithium silicate formed upon the initial charge. To solve this problem, predoping of silicon oxide with lithium has been performed. As the content of lithium predoped to silicon oxide is increased, the initial efficiency is more improved.

When forming a negative electrode by using such silicon oxide predoped with lithium, the negative electrode is formed generally by mixing a negative electrode active material powder with a binder, solvent (water, etc.) and desired additives (conductive material, thickener, etc.) to form a slurry, and applying the slurry onto a current collector, followed by drying. Herein, when the content of lithium predoped to silicon oxide for improving the initial efficiency is increased, the slurry has an increased pH and the lithium silicate phase formed in the particles becomes unstable to cause a problem in that lithium in lithium silicate reacts with water to generate hydrogen gas in the slurry. In addition, as lithium is eluted continuously, the slurry viscosity is changed to make it impossible to apply the slurry, or even if the slurry can be applied, the initial efficiency is degraded, and lithium may react with a trace amount of water in an electrolyte to cause degradation of life characteristics or high-temperature storage characteristics.

Therefore, to assist the stabilization of the slurry, there has been suggested formation of a lithium silicate phase stable against water as a main phase, or addition of silicate or phosphate particles, such as aluminum phosphate (see, Patent Document 1). However, such a means according to the related art is still insufficient for inhibiting hydrogen gas generation in the slurry, and has a problem of degradation of the initial efficiency caused by the addition.

### [References]

### [Patent Documents]

Patent Document 1: Japanese Patent Laid-Open No. 2021-093239

### DISCLOSURE

### Technical Problem

The present disclosure is designed to solve the problems of the related art, and therefore the present disclosure is directed to handling the problem of hydrogen gas generation in the slurry in a simple and effective manner regardless of the type of lithium-doped silicon oxide and to providing a negative electrode slurry for a lithium-ion secondary battery capable of improving the stability of the slurry, and a method for preparing the same.

### Technical Solution

According to an embodiment of the present disclosure, there is provided a negative electrode slurry for a lithium-ion secondary battery, including a lithium-doped silicon oxide as a negative electrode active material, water as a solvent, a binder, and single-walled carbon nanotubes functioning as a gas adsorbent, wherein the negative electrode slurry has a pH of 10 or more.

In the slurry as defined in the above embodiment, the content of single-walled carbon nanotubes may be 0.1-2.0 w% based on the total weight of the solid content in the slurry.

The slurry as defined in the above embodiment may further include a graphite-based material as a negative electrode active material.

In the embodiment of slurry further including the graphite-based material, the weight ratio (graphite-based material:lithium-doped silicon oxide) of the graphite-based material to the lithium-doped silicon oxide may be 98:2-50:50.

In the embodiment of slurry further including the graphite-based material, the content of single-walled carbon nanotubes may be 0.01-0.5 wt% based on the total weight of the solid content in the slurry.

The slurry as defined in the above embodiment may further include at least one of a conductive material and a thickener.

According to another embodiment of the present disclosure, there is provided a method for preparing a negative electrode slurry for a lithium-ion secondary battery, including the steps of: mixing a conductive material with a thickener to form a first mixture; kneading the first mixture with water as a solvent and single-walled carbon nanotubes functioning as a gas adsorbent to form a second mixture; kneading the second mixture with a lithium-doped silicon oxide as a negative electrode active material to form a third mixture; and mixing the third mixture with a binder to form a negative electrode slurry for a lithium-ion secondary battery.

In the method as defined in the above embodiment, a graphite-based material may be further added as a negative electrode active material in the step of forming the first mixture.

In the method as defined in the above embodiment, the single-walled carbon nanotubes functioning as a gas adsorbent may adsorb hydrogen gas generated in the slurry.

According to still another embodiment of the present disclosure, there is provided a secondary battery manufactured by using the slurry prepared by the method for preparing a negative electrode slurry for a lithium-ion secondary battery.

### Advantageous Effects

The negative electrode slurry according to the present disclosure includes a lithium-doped silicon oxide as a negative electrode active material and has a pH of 10 or more. When preparing the negative electrode slurry, carbon nanotubes are used as a gas adsorbent to adsorb hydrogen gas generated through the reaction of lithium in lithium silicate with water so that the slurry may be maintained stably. Therefore, it is possible to obtain uniform electrodes by using the slurry having a predetermined level of viscosity even after the lapse of time from the preparation of slurry. It is also possible to inhibit pinhole generation on the surface coated with the slurry caused by non-controlled hydrogen gas emission.

### DESCRIPTION OF DRAWINGS

FIG. 1 is a graph illustrating a change in amount of hydrogen gas generation with time.
FIG. 2 is a graph illustrating a change in amount of hydrogen gas generation with time.
FIG. 3 is a graph illustrating a change in amount of hydrogen gas generation with time.

### BEST MODE

Hereinafter, preferred embodiments of the present disclosure will be described in detail. However, the description proposed herein is just a preferable example for the purpose of illustrations only, not intended to limit the scope of the disclosure.

Throughout the specification, unless otherwise stated, `average particle diameter' refers to a particle diameter, i.e. median diameter (D₅₀), at 50% of the integrated value of a volume-based particle size distribution determined by the laser diffraction scattering method. In addition, the symbol '-' is used as a meaning including both ends of the range indicated by the corresponding description. For example, the expression ` 1-2' refers to `equal to or more than 1 and equal to or less than 2'. In addition, unless otherwise defined, various parameters described in the specification are determined at room temperature (25°C).

### [Negative Electrode Slurry for Lithium-Ion Secondary Battery]

The negative electrode slurry for a lithium-ion secondary battery according to an embodiment of the present disclosure includes a lithium-doped silicon oxide as a negative electrode active material, water as a solvent, a binder, and single-walled carbon nanotubes functioning as a gas adsorbent, and has a pH of 10 or more. According to another embodiment of the present disclosure, the slurry may further include an ingredient other than the above-listed ingredients as described hereinafter. Hereinafter, each ingredient of the slurry will be explained.

### (Negative Electrode Active Material)

### <1. Lithium-Doped Silicon Oxide>

The negative electrode slurry for a lithium-ion secondary battery according to the present disclosure includes silicon oxide as a negative electrode active material. Silicon oxide is represented by the general formula of SiOₓ, wherein 0 < x < 2, and may be exemplified by silicon monoxide, SiO (x = 1). Particularly, silicon monoxide is preferred because it has a low swelling ratio. For example, silicon oxide has a structure where Si microparticles are dispersed in a matrix of amorphous silicon oxide in a crystallite or amorphous form, and the average composition thereof may be represented by the general formula of SiOₓ. Silicon oxide may include SiOₓ having a specific x value only, or may be a mixture of two type of more of SiOₓ having a different x value.

Silicon oxide is preliminarily doped with lithium. Lithium is doped to the surface and/or inner part of silicon oxide particles. The method for doping silicon oxide with lithium is not particularly limited. For example, when using a thermal doping process, silicon oxide particles are mixed with a lithium source (metal lithium or a lithium compound (LiH, etc.)), and then the resultant mixture is fired under inert atmosphere (argon atmosphere, nitrogen atmosphere, etc.) at a high temperature (e.g. about 350-900°C) so that silicon oxide may be doped with lithium. Instead of the thermal doping process, a redox reaction or electrochemical process may be used to dope silicon oxide with lithium. The doped lithium may react with silicon oxide to form lithium silicate (Li₂Si₂O₅, Li₂SiO₃, Li₄SiO₄, etc.) According to an embodiment of the present disclosure, the lithium-doped silicon oxide may include at least one of Li₂Si₂O₅, Li₂SiO₃, and Li₄SiO₄.

For example, the content of lithium doped to silicon oxide may be 1-20 wt%, or 1-10 wt%, based on the total weight of the finished negative electrode active material (i.e. silicon oxide after lithium doping). As the content of lithium doped to silicon oxide is increased, the initial efficiency is improved.

The lithium-doped silicon oxide may have a particle shape, and the particles may have an average particle diameter (D₅₀) of 0.1-10 µm, particularly 1-9 µm, or 1-2 µm, but are not limited thereto.

Meanwhile, according to an embodiment of the present disclosure, the lithium content may be determined by inductively coupled plasma light emission spectroscopy, but is not limited thereto.

### <2. Graphite-Based Material>

The negative electrode slurry for a lithium-ion secondary battery according to another embodiment of the present disclosure may further include a graphite-based material as a negative electrode active material (i.e. graphite-based negative electrode active material), besides the lithium-doped silicon oxide. The graphite-based material includes at least one of artificial graphite and natural graphite.

Artificial graphite is graphite produced industrially by firing (i.e. graphitizing) a graphitizable carbonaceous material, such as cokes, coal tar, coal tar pitch, or the like, at a high temperature (e.g. about 2,800°C). Known examples of artificial graphite include mesocarbon microbeads, mesocarbon fibers, massive artificial graphite, or the like. However, artificial graphite that may be used in the present disclosure is not particularly limited. In general, it is known that artificial graphite is harder than natural graphite and undergoes lower swelling caused by charge/discharge as compared to natural graphite, when being used in the negative electrode of a lithium-ion secondary battery.

Natural graphite is graphite produced by mining graphite and subjecting it to processing, such as concentration and purification. Known examples of natural graphite include flake-type natural graphite, massive natural graphite, earth-like natural graphite, or the like. However, natural graphite that may be used in the present disclosure is not particularly limited.

For example, the graphite-based material may have an average particle diameter (D₅₀) of 3-30 µm, preferably 5-25 µm, or 15-20 µm.

When both the graphite-based material and lithium-doped silicon oxide are used as negative electrode active materials, the weight ratio of the graphite-based material to lithium-doped silicon oxide in the negative electrode active material may be selected considering the swelling ratio and capacity of the lithium-doped silicon oxide based on the graphite-based material. For example, the weight ratio (graphite-based material:lithium-doped silicon oxide) of the graphite-based material to the lithium-doped silicon oxide may be 98:2-50:50, 98:2-70:30, or 90:10-80:20.

When only the lithium-doped silicon oxide is used as a negative electrode active material, the content of the negative electrode active material (i.e. lithium-doped silicon oxide) in the slurry may be 70-99 wt%, preferably 80-98 wt%, based on the total weight of the solid content in the slurry, for example. When both the graphite-based material and lithium-doped silicon oxide are used as negative electrode active materials, the content of the negative electrode active material (i.e. lithium-doped silicon oxide and graphite-based material) in the slurry may fall within the same range (70-99 wt%) as defined above. However, considering the swelling ratio and capacity of both materials, the content of the negative electrode active material may be larger as compared to the use of lithium-doped silicon oxide alone, and for example, may be 95.5 wt% based on the total weight of the solid content in the slurry.

### (Solvent)

The negative electrode slurry for a lithium-ion secondary battery according to the present disclosure includes water as a solvent. Preferably, water may be pure water, particularly deionized water. The solvent may be used in such an amount that the slurry may have a solid content (i.e. ingredients other than the solvent) of 30-85 wt%, preferably 60-70 wt%, and for example, 65 wt%.

### (Binder)

The binder is added as an ingredient which accelerates the binding of an active material with a conductive material or binding to a current collector. Since the solvent used herein is water, the binder is a water-soluble aqueous binder. Particular examples of the aqueous binder include, but are not limited to: styrene butadiene rubber (SBR), polyvinyl alcohol (PVA), polyacrylonitrile, polyvinyl pyrrolidone, polyacrylic acid, acrylamide, polyimide, fluororubber, urethane rubber, or the like, and such aqueous binders may be used alone or in combination. Preferably, styrene butadiene rubber (SBR) demonstrated as reducing environmental load, improving battery characteristics and reducing the cost is used.

The content of binder may be 0.1-30 wt%, preferably 0.5-20 wt%, and more preferably 1-10 wt%, based on the total weight of the solid content of the slurry. When the content of binder satisfies the above-defined range, it is possible to impart sufficient adhesion to an electrode while preventing degradation of the capacity characteristics of a battery.

### (Gas Adsorbent)

The negative electrode slurry for a lithium-ion secondary battery according to the present disclosure is characterized in that it includes single-walled carbon nanotubes (SWCNTs) functioning as a gas adsorbent. As described above, in the slurry using a lithium-doped silicon oxide as a negative electrode active material, lithium reacts with water to generate hydrogen gas. This reaction is represented by the reaction scheme of 2Li + 2H₂O → 2LiOH + H₂. The gas adsorbent is used to adsorb the hydrogen gas. Since the hydrogen gas generated in the slurry is adsorbed by the gas adsorbent, the slurry maintains stability and thus slurry viscosity is maintained constantly even after the lapse of a time from the preparation of the slurry.

The single-walled carbon nanotubes have a specific hollow structure including graphene sheets wound cylindrically, have a large specific surface area and can adsorb and store various gases, particularly hydrogen gas, in a large amount. Hydrogen gas is adsorbed to the inner space and other surface (outer wall) of single-walled carbon nanotubes. In addition, when a plurality of (e.g. 6-200, particularly 12) single-walled carbon nanotubes form a bundle (nanotube bundle), hydrogen gas is also adsorbed to the interstitial site among the carbon nanotubes.

The single-walled carbon nanotubes may be subjected to end-opening by which the tip ends of carbon nanotubes are opened through the heating under vacuum (e.g. heating at a temperature of 600-1000°C, particularly heating at 700°C) in order to accelerate adsorption of hydrogen to the inside thereof. As such, the single-walled carbon nanotubes used according to the present disclosure may be constituted in such a manner that they may function particularly as a gas adsorbent.

The single-walled carbon nanotubes may have an average diameter of 0.6-10 nm, preferably 0.8-5 nm, and more preferably 0.8-3 nm, particularly 1.2 nm, 1.9 nm, or the like. In addition, the single-walled carbon nanotubes may have an average length of 0.5-20 µm, preferably 0.5-10 µm, and more preferably 0.5-5 µm. The average diameter and average length of the single-walled carbon nanotubes may be determined by taking a photograph with a scanning electron microscope (SEM), and may be average values of measurements of 10-100 carbon nanotubes determined by SEM.

Since the single-walled carbon nanotubes tend to agglomerate among themselves through the interaction, they may be provided as a single-walled carbon nanotube dispersion in which the single-walled carbon nanotubes can be dispersed and maintained suitably in order to prevent excessive formation of agglomerates. The carbon nanotube dispersion includes single-walled carbon nanotubes, a dispersant and a solvent (e.g. water). When using water as a solvent, a water dispersion of single-walled carbon nanotubes may be provided, wherein water itself may be used as a solvent for slurry. Particular examples of the dispersant include polyvinyl pyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, polyethylene imine, or the like, and such dispersants may be used alone or in combination. For example, the content of single-walled carbon nanotubes in the dispersion may be 0.01-5 wt%, preferably 0.01-3 wt%, more preferably 0.1-2 wt%, and even more preferably 0.1-1 wt%, particularly 0.4 wt%, based on the total weight of the carbon nanotube dispersion in the dispersion, but is not particularly limited.

The single-walled carbon nanotubes are contained in such an amount that they may sufficiently adsorb hydrogen gas generated in the slurry effectively. Fundamentally, as the content of single-walled carbon nanotubes is increased, a larger amount of hydrogen gas may be adsorbed. When using lithium-doped silicon oxide only as a negative electrode active material, the content of single-walled carbon nanotubes in the slurry may be 0.1-10 wt%, 0.1-5.0 wt%, or 0.1-2.0 wt%, based on the total weight of the solid content in the slurry. When using both a lithium-doped silicon oxide and a graphite-based material as negative electrode active materials, the amount of hydrogen gas generated in the slurry is reduced as the proportion of lithium-doped silicon oxide is reduced. Therefore, in this case, the content of single-walled carbon nanotubes in the slurry may be reduced, and for example, the content of single-walled carbon nanotubes in the slurry may be 0.01-1.0 wt%, or 0.01-0.5 wt%, based on the total weight of the solid content in the slurry.

### (Conductive Material)

In some embodiments, the negative electrode slurry for a lithium-ion secondary battery may further include a conductive material. The conductive material is not particularly limited, as long as it does not cause any chemical change. Particular examples of the conductive material include, but are not limited to: amorphous carbonaceous materials (carbonaceous materials added separately from the graphite-based material as a negative electrode active material), such as carbon black, acetylene black, ketjen black, denka black, thermal black, channel black, furnace black, lamp black, etc.; metal powder or metal fibers, such as aluminum, tin, bismuth, silicon, antimony, nickel, copper, titanium, vanadium, chromium, manganese, iron, cobalt, zinc, molybdenum, tungsten, silver, gold, lanthanum, ruthenium, platinum, iridium, etc.; conductive whiskers, such as zinc oxide, potassium carbonate, etc.; conductive metal oxides, such as titanium oxide; conductive polymers, such as polyaniline, polythiophene, polyacetylene, polypyrrole, polyphenylene derivatives, etc.; or the like. Such conductive materials may be used alone or in combination.

The content of conductive material maybe 0.1-30 wt%, preferably 0.5-15 wt%, and more preferably 0.5-10 wt%, based on the total weight of the solid content in the slurry. When the content of the conductive material satisfies the above-defined range, sufficient conductivity may be provided, and the content of negative electrode active material may not be reduced, and thus battery capacity may be ensured advantageously.

### (Thickener)

In some embodiments, the negative electrode slurry for a lithium-ion secondary battery may further include a thickener. Particularly, the thickener may be a cellulose-based compound. Particular examples of the cellulose-based compound include carboxymethyl cellulose (CMC), methyl cellulose (MC), hydroxypropyl cellulose (HPC), methylhydroxypropyl cellulose (MHPC), ethylhydroxypropyl cellulose (EHEC), methylethylhydroxyethyl cellulose (MEHEC), or the like, and such compounds may be used alone or in combination. For example, the content of thickener may be 0.1-10 wt%, or 0.5-10 wt% based on the total weight of the solid content in the slurry.

The negative electrode slurry for a lithium-ion secondary battery has a pH determined according to the composition or content of each ingredient in the slurry, and has a natural pH of about 7-8, when using a silicon-based material not doped with alkali, such as lithium, or graphite as an active material. When using lithium-doped silicon oxide as an active material, pH is increased as the content of lithium doping is increased, and the negative electrode slurry has a high pH value of 10 or more.

### [Method for Preparing Negative Electrode Slurry for Lithium-Ion Secondary Battery]

Hereinafter, a method for preparing a negative electrode slurry for a lithium-ion secondary battery will be explained. The method for preparing a negative electrode slurry for a lithium-ion secondary battery according to the present disclosure is characterized by the order of introducing starting materials. Particularly, the method according to the present disclosure is characterized in that a lithium-doped silicon oxide as a negative electrode active material is introduced as late as possible in the preparation process. In this manner, kneading is carried out at a low solid content free from a lithium-doped silicon oxide in the first half of the process, and a lithium-doped silicon oxide is introduced at the second half of the process. Therefore, it is possible to inhibit generation of hydrogen gas caused by the reaction of lithium with water to the highest degree.

In the method for preparing a negative electrode slurry for a lithium-ion secondary battery according to an embodiment of the present disclosure, the slurry further includes a conductive material and a thickener, besides a lithium-doped silicon oxide as a negative electrode active material, water as a solvent, a binder and single-walled carbon nanotubes functioning as a gas adsorbent. The method includes the steps of: mixing a conductive material with a thickener to form a first mixture; introducing water and single-walled carbon nanotubes to the first mixture and carrying out kneading to form a second mixture; introducing a lithium-doped silicon oxide to the second mixture and carrying out kneading to form a third mixture; and introducing a binder to the third mixture and carrying out kneading to form a negative electrode slurry for a lithium-ion secondary battery.

In the method for preparing a negative electrode slurry for a lithium-ion secondary battery according to another embodiment of the present disclosure, the slurry further includes a graphite-based material as a negative electrode active material, a conductive material and a thickener, besides a lithium-doped silicon oxide as a negative electrode active material, water as a solvent, a binder and single-walled carbon nanotubes functioning as a gas adsorbent. The method includes the steps of: mixing a graphite-based material as a negative electrode active material, a conductive material and a thickener to form a first mixture; introducing water and single-walled carbon nanotubes to the first mixture and carrying out kneading to form a second mixture; introducing a lithium-doped silicon oxide to the second mixture and carrying out kneading to form a third mixture; and introducing a binder to the third mixture and carrying out kneading to form a negative electrode slurry for a lithium-ion secondary battery.

When using a binder with no a thickener, a part of the binder may be introduced instead of the thickener in the step of forming a first mixture.

### [Manufacture of Negative Electrode]

After applying the negative electrode slurry for a lithium-ion secondary battery to a negative electrode current collector, drying and pressing may be carried out to obtain a negative electrode including a negative electrode active material layer formed on the negative electrode current collector. Before applying the negative electrode slurry, a solvent may be further added to the slurry after hard mixing and then application may be carried out in order to facilitate the application.

In a variant, the negative electrode slurry may be cast onto another support and peeled therefrom, and then the resultant film may be laminated onto a negative electrode current collector to obtain a negative electrode. In addition, any methods other than the above-mentioned methods may be used to form a negative electrode active material layer on a negative electrode current collector.

In the drying, pressing and casting steps of the method for manufacturing a negative electrode, heating may be carried out.

### (Negative Electrode Current Collector)

The negative electrode current collector used for the negative electrode is not particularly limited, as long as it may be used electrochemically stably and has conductivity. Particular examples of the negative electrode current collector include: copper; stainless steel; aluminum; nickel; titanium; baked carbon; aluminum-cadmium alloy; surface-treated copper or stainless steel (e.g. surface-treated with carbon, nickel, titanium, silver, etc.); or the like.

The negative electrode current collector may have a thickness of 3-500 µm. Fine surface irregularities may be formed on the surface of the negative electrode current collector to enhance the adhesion to the negative electrode active material. For example, the negative electrode current collector may have various shapes, such as a film, a sheet, a foil, a net, a porous body, a foam or non-woven web body, etc.

### [Lithium-Ion Secondary Battery]

The lithium-ion secondary battery includes the negative electrode together with a positive electrode, a separator interposed between the negative electrode and the positive electrode, and a non-aqueous electrolyte. The constitutional elements other than the negative electrode are well-known to those skilled in the art, and thus detailed description thereof will be omitted herein.

### MODE FOR DISCLOSURE

Hereinafter, the present disclosure will be explained in more detail with reference to examples and comparative examples. However, the scope of the present disclosure is not limited thereto.

### [Example 1]

Lithium-doped SiO having an average particle diameter of 7 µm and a lithium content of 9 wt%, as a negative electrode active material (also referred to as 'AM' hereinafter), carbon black (also referred to as 'CB' hereinafter) as a conductive material, single-walled carbon nanotubes (also referred to as 'SWCNTs' hereinafter, used as aqueous dispersion of single-walled carbon nanotubes having a solid content of 0.4 wt%) as a gas adsorbent, styrene butadiene rubber (also referred to as `SBR' hereinafter) as a binder, and carboxymethyl cellulose (also referred to as 'CMC' hereinafter) as a thickener were prepared at a weight ratio of solid content (AM/CB/SWCNTs/SBR/CMC) of 89.0 wt%/3.3 wt%/0.1 wt%/3.6 wt%/4.0 wt%. Then, carbon black was mixed with carboxymethyl cellulose, aqueous dispersion of single-walled carbon nanotubes and water were introduced thereto, kneading was carried out sufficiently, and then lithium-doped SiO was introduced thereto, followed by kneading. Finally, styrene butadiene rubber was introduced, followed by mixing, to prepare a negative electrode slurry for a lithium-ion secondary battery. Herein, the slurry had a pH of 12.5. Thermal doping was carried out so that SiO might be doped with lithium.

### [Example 2]

A negative electrode slurry for a lithium-ion secondary battery was prepared in the same manner as Example 1, except that the weight ratio of solid content (AM/CB/SWCNTs/SBR/CMC) was 89.0 wt%/3.2 wt%/0.2 wt%/3.6 wt%/4.0 wt%.

### [Example 3]

A negative electrode slurry for a lithium-ion secondary battery was prepared in the same manner as Example 1, except that the weight ratio of solid content (AM/CB/SWCNTs/SBR/CMC) was 89.0 wt%/3.1 wt%/0.3 wt%/3.6 wt%/4.0 wt%.

### [Example 4]

A negative electrode slurry for a lithium-ion secondary battery was prepared in the same manner as Example 1, except that the weight ratio of solid content (AM/CB/SWCNTs/SBR/CMC) was 89.0 wt%/3.0 wt%/0.4 wt%/3.6 wt%/4.0 wt%.

### [Example 5]

A negative electrode slurry for a lithium-ion secondary battery was prepared in the same manner as Example 1, except that the weight ratio of solid content (AM/CB/SWCNTs/SBR/CMC) was 89.0 wt%/2.9 wt%/0.5 wt%/3.6 wt%/4.0 wt%.

### [Example 6]

A negative electrode active material (also referred to as 'AM' hereinafter) containing artificial graphite having an average particle diameter of 20 µm mixed with lithium-doped SiO having an average particle diameter of 7 µm and a lithium content of 9 wt% at a weight ratio of 85 wt%/15 wt% (artificial graphite/lithium-doped SiO), carbon black (also referred to as 'CB' hereinafter) as a conductive material, single-walled carbon nanotubes (also referred to as 'SWCNTs' hereinafter, used as aqueous dispersion of single-walled carbon nanotubes having a solid content of 0.4 wt%) as a gas adsorbent, styrene butadiene rubber (also referred to as `SBR' hereinafter) as a binder, and carboxymethyl cellulose (also referred to as 'CMC' hereinafter) as a thickener were prepared at a weight ratio of solid content (AM/CB/SWCNTs/SBR/CMC) of 95.5 wt%/0.99 wt%/0.01 wt%/2.5 wt%/1.0 wt%. Then, artificial graphite, carbon black and carboxymethyl cellulose were mixed and kneaded sufficiently while adding water adequately thereto. Herein, the kneaded slurry had a solid content of 65 wt%. To the resultant slurry, aqueous dispersion of carbon nanotubes was further introduced thereto, kneading was carried out sufficiently, and then lithium-doped SiO was introduced thereto and kneading was carried out for a predetermined time. Herein, the resultant slurry had a solid content of 50 wt%. Finally, styrene butadiene rubber was introduced, followed by mixing, to prepare a negative electrode slurry for a lithium-ion secondary battery. Herein, the slurry had a pH of 11.9.

### [Example 7]

A negative electrode slurry for a lithium-ion secondary battery was prepared in the same manner as Example 6, except that the weight ratio of solid content (AM/CB/SWCNTs/SBR/CMC) was 95.5 wt%/0.97 wt%/0.03 wt%/2.5 wt%/1.0 wt%.

### [Example 8]

A negative electrode slurry for a lithium-ion secondary battery was prepared in the same manner as Example 6, except that the weight ratio of solid content (AM/CB/SWCNTs/SBR/CMC) was 95.5 wt%/0.95 wt%/0.05 wt%/2.5 wt%/1.0 wt%.

### [Example 9]

A negative electrode slurry for a lithium-ion secondary battery was prepared in the same manner as Example 6, except that the weight ratio of solid content (AM/CB/SWCNTs/SBR/CMC) was 95.5 wt%/0.93 wt%/0.07 wt%/2.5 wt%/1.0 wt%.

### [Comparative Example 1]

A negative electrode slurry for a lithium-ion secondary battery was prepared in the same manner as Example 1, except that single-walled carbon nanotubes as a gas adsorbent were not used, and the weight ratio of solid content (AM/CB/SBR/CMC) was 89.0 wt%/3.4 wt%/3.6 wt%/4.0 wt%.

### [Comparative Example 2]

A negative electrode slurry for a lithium-ion secondary battery was prepared in the same manner as Example 6, except that single-walled carbon nanotubes as a gas adsorbent were not used, and the weight ratio of solid content (AM/CB/SBR/CMC) was 95.5 wt%/1.0 wt%/2.5 wt%/1.0 wt%.

### [Comparative Example 3]

A negative electrode slurry for a lithium-ion secondary battery was prepared in the same manner as Example 6, except that:
First, lithium-doped SiO, artificial graphite, carbon black and carboxymethyl cellulose were mixed and kneaded sufficiently, while adding water adequately thereto. Herein, the resultant slurry had a solid content of 65 wt%. Then, aqueous dispersion of carbon nanotubes was introduced, kneading was carried out for a predetermined time, styrene butadiene rubber was introduced, kneading was carried out, and the resultant slurry was controlled to a final solid content to 50 wt% by using water.

Herein, the slurry had a pH of 12.1.

### [Test Example: Determination of Gas Generation with Time]

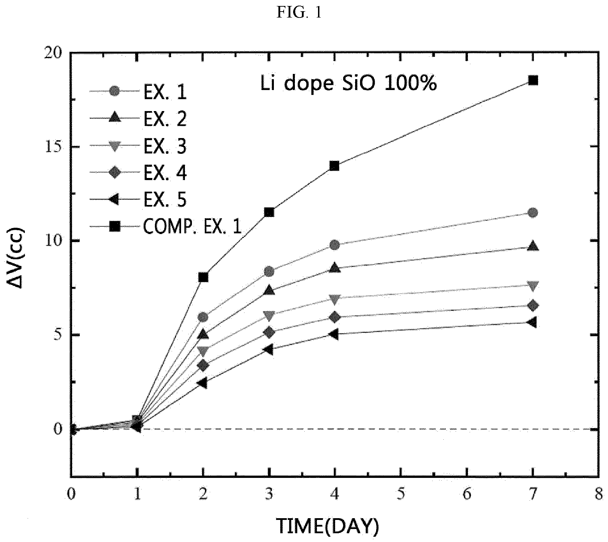

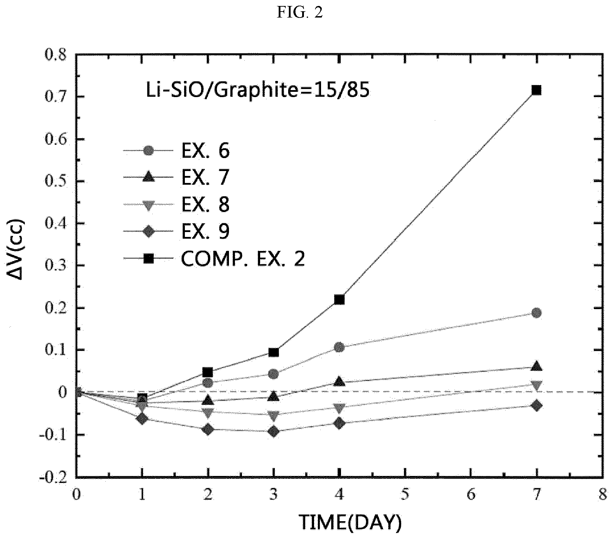

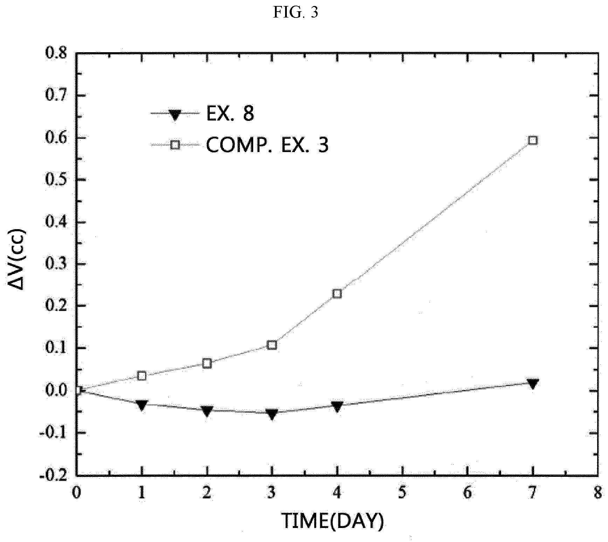

First, 10 g of the negative electrode slurry for a lithium-ion secondary battery according to each of Examples 1-9 and Comparative Examples 1-3 was weighed, introduced to a pouch made of aluminum laminate and sealed under reduced pressure to measure the volume by the Archimedes' method. Then, the volume was measured in the same manner every 24 hours for a week. The results of Examples 1-5 and Comparative Example 1 are shown in the following Table 1 and FIG. 1, and the results of Examples 6-9 and Comparative Examples 2 and 3 are shown in the following Table 2, FIG. 2 and FIG. 3.

**[Table 1]**

| | Ex. 1 | Ex. 2 | Ex. 3 | Ex. 4 | Ex. 5 | Comp. Ex. 1 |
|---|---|---|---|---|---|---|
| Gas generation after 1 week (cc) | 11.48 | 9.65 | 7.65 | 6.56 | 5.67 | 18.50 |

**[Table 2]**

| | Ex. 6 | Ex. 7 | Ex. 8 | Ex. 9 | Comp. Ex. 2 | Comp. Ex. 3 |
|---|---|---|---|---|---|---|
| Gas generation | 0.19 | 0.06 | 0.02 | -0.03 | 0.72 | 0.59 |
| after 1 week (cc) | | | | | | |

As shown in Table 1, Table 2 and FIG. 1 to FIG. 3, an increase in volume is significantly inhibited in Examples 1-9 as compared to Comparative Examples 1 and 2 using no single-walled carbon nanotubes, which suggests that hydrogen gas generated in the slurry is adsorbed to the single-walled carbon nanotubes in the slurry. In addition, when comparing Examples 1-5 with one another and comparing Examples 6-9 with one another, an increase in volume is further inhibited as the content of single-walled carbon nanotubes is increased, which demonstrates that a larger amount hydrogen gas is adsorbed.

In addition, as shown in FIG. 3, when comparing Example 8 with Comparative Example 3, in the case of Comparative Example 3 in which lithium-doped silicon oxide is introduced initially together with graphite or carbon black and the mixture is kneaded, kneading under a high solid content causes physical damages on the surface of silicon oxide and easy elution of lithium in the particles, resulting in an increase in gas generation, as the time during which lithium-doped silicon oxide is present in the slurry is increased. Therefore, it is demonstrated that when lithium-doped silicon oxide is introduced under a low solid content after finishing the kneading under a high solid content, like Example 8, and kneading is carried out within a short time, while the surface is not damaged, it is possible to inhibit gas generation.

## Claims

1. A negative electrode slurry for a lithium-ion secondary battery, comprising:
a lithium-doped silicon oxide as a negative electrode active material;
water as a solvent;
a binder; and
single-walled carbon nanotubes functioning as a gas adsorbent,
wherein the negative electrode slurry has a pH of 10 or more.

2. The slurry according to claim 1, wherein the content of single-walled carbon nanotubes is 0.1-2.0 wt% based on the total weight of the solid content in the slurry.

3. The slurry according to claim 1, which further comprises a graphite-based material as a negative electrode active material.

4. The slurry according to claim 3, wherein the weight ratio (graphite-based material lithium-doped silicon oxide) of the graphite-based material to the lithium-doped silicon oxide is 98:2-50:50.

5. The slurry according to claim 3 or 4, wherein the content of single-walled carbon nanotubes is 0.01-0.5 wt% based on the total weight of the solid content in the slurry.

6. The slurry according to any one of claims 1 to 5, which further comprises at least one of a conductive material and a thickener.

7. A method for preparing a negative electrode slurry for a lithium-ion secondary battery, comprising the steps of:
mixing a conductive material with a thickener to form a first mixture;
kneading the first mixture with water as a solvent and single-walled carbon nanotubes functioning as a gas adsorbent to form a second mixture;
kneading the second mixture with a lithium-doped silicon oxide as a negative electrode active material to form a third mixture; and
mixing the third mixture with a binder to form negative electrode slurry for a lithium-ion secondary battery.

8. The method according to claim 7, which comprises further adding a graphite-based material as a negative electrode active material in the step of forming the first mixture.

9. The method according to claim 7 or 8, wherein the single-walled carbon nanotubes functioning as a gas adsorbent adsorb hydrogen gas generated in the slurry.

10. A secondary battery manufactured by using the slurry prepared by the method as defined in claim 7.
